# EUROPEAN PATENT APPLICATION

(11) **EP 4 847 307 A1**
(43) Date of publication of application: **02.12.2026**
(21) Application number: 24925613.2
(22) Date of filing: 03.12.2024
(51) Int. Cl.: B60N 2/26, B60N 2/28

(54) **AUTOMATIC SHOULDER STRAP SPRING-OUTWARD MECHANISM AND CHILD SAFETY SEAT**

(30) Priority: 22.02.2024 CN 202420334513 U
(71) Applicant: Ningbo Baby First Baby Products Co., Ltd., Ningbo, Zhejiang 315412 (CN)
(72) Inventor: LIU, Jianchun, Ningbo, Zhejiang 315412 (CN); JI, Xuewei, Ningbo, Zhejiang 315412 (CN)
(74) Representative: Lorenz Seidler Gossel Part. mbB
(86) International application number: PCT/CN2024/136548
(87) International publication number: WO 2025/175875

(57) **Abstract**

An automatic shoulder strap spring-outward mechanism and a child safety seat. The automatic shoulder strap spring-outward mechanism comprises a headrest assembly (10), sheath assemblies (20), and elastic members (30). The headrest assembly (10) is adapted to be connected to a backrest of a seat. Each sheath assembly (20) comprises a sheath body (22) and a flexible mounting sleeve (21). The sheath body (22) is adapted to be connected to a shoulder strap. The flexible mounting sleeve (21) extends in the length direction of the sheath assembly (20) and is connected to the sheath body (22). A slot suitable for mounting a corresponding elastic member (30) is formed inside the flexible mounting sleeve (21). The elastic member (30) is connected to the headrest assembly (10). The elastic member (30) is suitable for driving the sheath assembly (20) and the shoulder strap to spring outward, so that a passenger can get in and out of the seat. The child safety seat uses the automatic shoulder strap spring-outward mechanism. The present invention has the characteristics of having a simple structure and being convenient for passengers to get in and out of the seat.

## Description

### TECHNICAL FIELD

The present invention relates to the technical field of child safety seats, and specifically to an automatic shoulder strap outward-urging mechanism and a child safety seat including the same.

### BACKGROUND

A child safety seat is a child restraint system for use in combination with a seat of a vehicle. A child is restrained on the child safety seat by a harness including shoulder straps, so that the child's body is supported and enveloped, thereby providing the child with a comfortable riding experience and safety protection during travel of the vehicle, and effectively preventing the occurrence of child riding accidents.

A harness of a child safety seat is generally of a three-point, four-point, or five-point type. To place a child into or take a child out of the child safety seat, the harness needs to be manually pulled aside first. However, such harness, especially the five-point harness, has multiple straps that tend to tangle with one another, making it inconvenient for a parent to place the child into or take the child out of the safety seat.

### SUMMARY

An objective of the present invention is to provide an automatic shoulder strap outward-urging mechanism, which enables a shoulder strap to be automatically urged outward when released from a buckle, thereby allowing a passenger to enter and exit a seat.

Another objective of the present invention is to provide a child safety seat, to make it convenient for a child to enter and exit the safety seat.

To achieve one of the objectives of the present invention, the present invention adopts the following technical solution. An automatic shoulder strap outward-urging mechanism is provided, including a headrest assembly, a sheath assembly, and an elastic member, where the headrest assembly is configured to be connected to a backrest of a seat, the sheath assembly includes a sheath body and a flexible mounting sleeve, the sheath body is configured to be connected to a shoulder strap, the flexible mounting sleeve extends in a length direction of the sheath assembly and the flexible mounting sleeve is connected to the sheath body, a slot configured for mounting the elastic member is formed inside the flexible mounting sleeve, the elastic member is connected to the headrest assembly, and the elastic member is configured to urge the sheath assembly and the shoulder strap outward, allowing a passenger to enter and exit the seat.

Preferably, the flexible mounting sleeve includes a first extension segment and a second extension segment arranged in sequence along a length direction of the slot, the first extension segment is connected to the sheath body, the second extension segment is configured to be connected to the headrest assembly together with the elastic member, an end limiting portion is provided at an end of the second extension segment away from the first extension segment, an opening in communication with the slot is provided at a side of the end limiting portion adjacent to the first extension segment, the elastic member is configured to enter and exit the slot through the opening, and the end limiting portion is configured to fix an end of the elastic member.

Preferably, the elastic member is a rod-like structure.

Preferably, a first end of the sheath assembly is provided with a connection member configured to be connected to the headrest assembly, and a second end of the sheath assembly is configured to be urged outward by the elastic member.

Preferably, the connection member is one or more of a hook-and-loop fastener, a button, a tie, a hook, or a snap-fit fastener, to be detachably connected to the headrest assembly.

Preferably, the headrest assembly is provided with a guide groove, the elastic member is configured to be inserted into the guide groove, and an extending direction of the guide groove defines an urging direction of the elastic member.

Preferably, the guide groove extends obliquely upward to guide the elastic member to be urged obliquely upward.

Preferably, the headrest assembly includes a housing and an outer cover mounted on an outer side of the housing, and the elastic member is connected to the housing or the outer cover.

Preferably, two sheath assemblies are provided, the two sheath assemblies are connected to the headrest assembly by different elastic members respectively, and the two sheath assemblies are configured to be urged away from each other under action of the different elastic members.

To achieve one of the objectives of the present invention, the present invention adopts the following technical solution. A child safety seat is provided, using any of the above-mentioned automatic shoulder strap outward-urging mechanisms.

Compared with the prior art, the present invention has the following advantages. (1) The shoulder strap can be automatically urged outward, allowing a passenger to enter and exit the seat. For example, when a child needs to be placed into the safety seat, the elastic member can push, via the sheath assembly, the shoulder strap outward so as to fully expose the backrest and the seat cushion, thereby allowing the child to quickly enter or exit the seat. Moreover, the present invention can solve the problem of five-point harnesses that the shoulder strap is prone to tangling and knotting with the crotch strap, thereby reducing the number of steps and the time required for fastening the harness. (2) The mechanism has a simple structure, is convenient to assemble and use, and is cost-effective to use.

### BRIEF DESCRIPTION OF THE DRAWINGS

FIG. 1 is a schematic structural diagram of a child safety seat according to an embodiment of the present invention.
FIG. 2 is a schematic structural diagram of a child safety seat according to an embodiment of the present invention when shoulder straps are urged outward.
FIG. 3 to FIG. 5 are schematic diagrams showing a process of mounting an elastic member to a sheath assembly according to an embodiment of the present invention.
FIG. 6 is a schematic diagram showing a process of mounting a sheath assembly and an elastic member to a headrest assembly according to an embodiment of the present invention.
FIG. 7 is a schematic structural diagram of a child safety seat according to another embodiment of the present invention when shoulder straps are urged outward.
FIG. 8 is a schematic diagram showing assembly steps of the child safety seat shown in FIG. 7.

In the drawings, the reference numerals respectively represent: 10. headrest assembly; 101. hook; 102. guide groove; 11. housing; 12. outer cover; 20. sheath assembly; 21. flexible mounting sleeve; 210. slot; 211. first extension segment; 212. second extension segment; 2120. opening; 2121. end limiting portion; 22. sheath body; 23. hanging buckle; 30. elastic member.

### DETAILED DESCRIPTION OF THE EMBODIMENTS

The present invention will be further described below through specific embodiments. It should be noted that the embodiments or technical features described below may be arbitrarily combined to form new embodiments without conflict.

In the description of the present invention, it should be noted that orientation and position relationships indicated by the orientation terms such as "center", "transverse", "longitudinal", "length", "width", "thickness", "on", "below", "front", "rear", "left", "right", "vertical", "horizontal", "top", "bottom", "inner", "outer", "clockwise", and "counterclockwise" are based on the orientation or positional relationships shown in the drawings, and are only for the convenience of describing the present invention and simplifying the description, rather than indicating or implying that the apparatus or element described must have a specific orientation or be constructed and operated in a specific orientation, and therefore are not to be construed as limiting the present invention.

It should be noted that in the specification and claims of the present invention, the terms such as "first" and "second" are intended to distinguish between similar objects but do not indicate a particular order or sequence.

In the specification and claims of the present invention, the terms "include," "comprise," and any other variants thereof are intended to cover a non-exclusive inclusion. For example, a process, method, system, product, or device that includes a list of steps or units is not necessarily limited to those expressly listed steps or units, but may include other steps or units not expressly listed or inherent to such a process, method, product, or device.

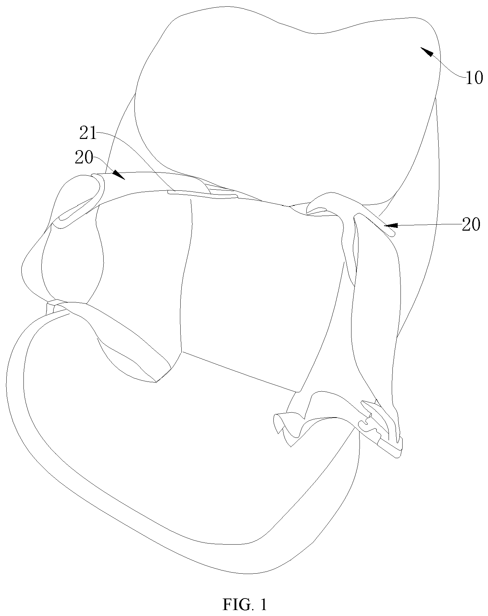

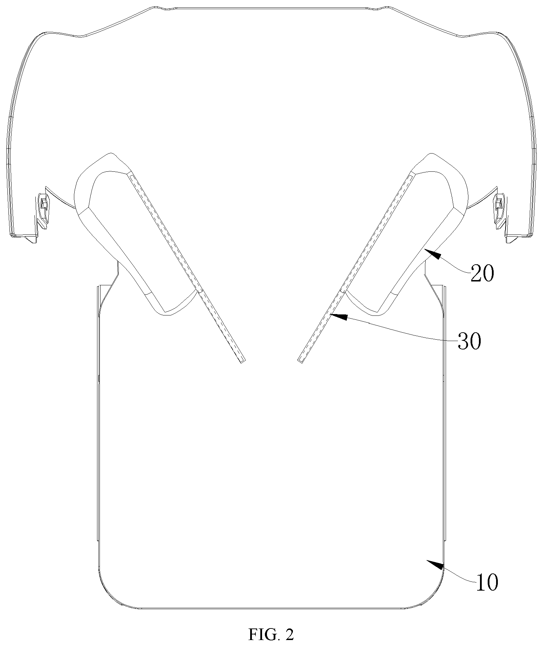

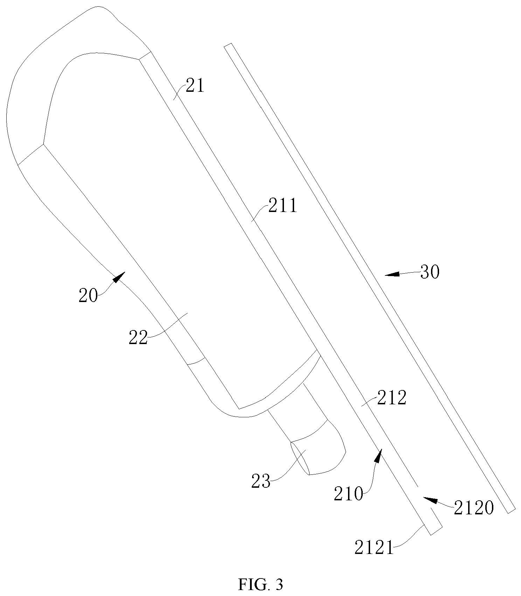

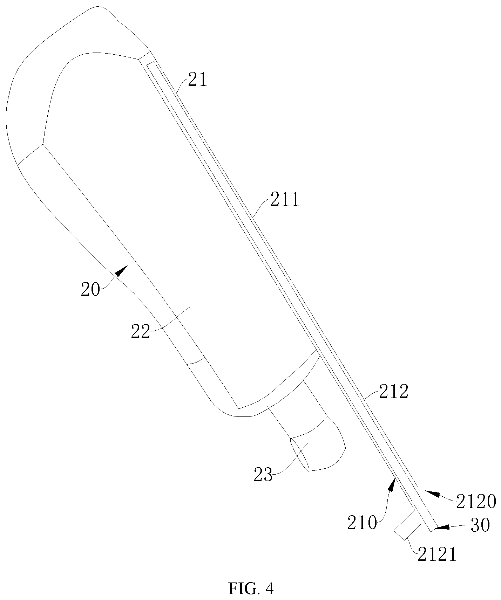

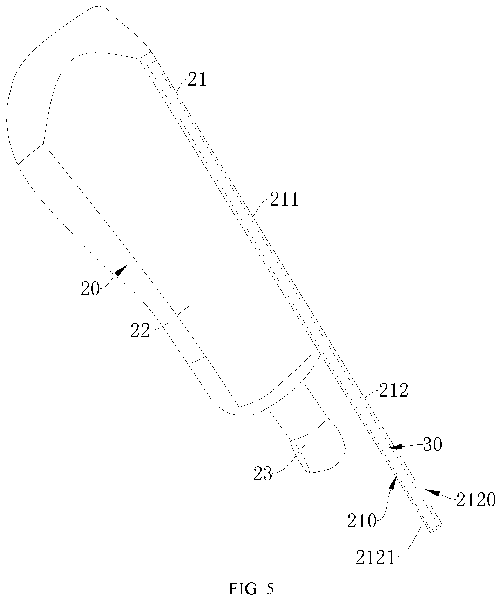

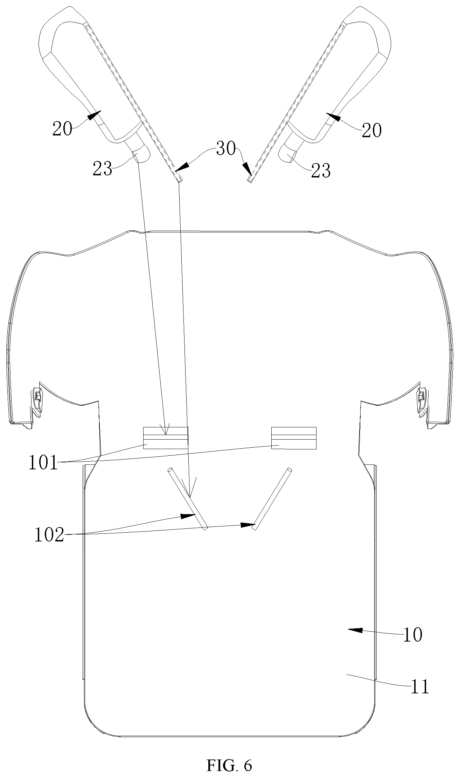

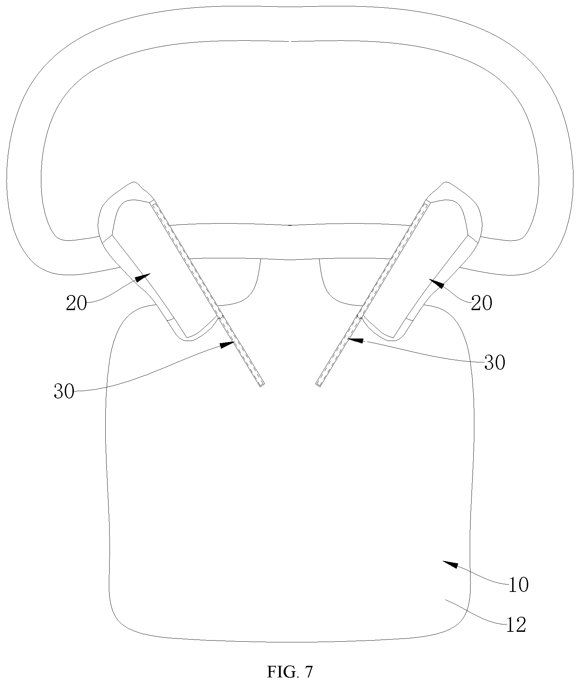

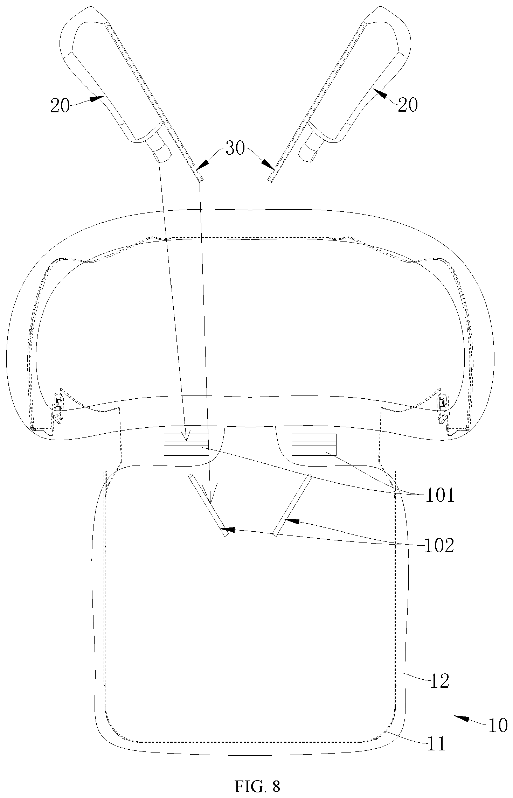

The present invention provides an automatic shoulder strap outward-urging mechanism. As shown in FIG. 1 to FIG. 8, the automatic shoulder strap outward-urging mechanism includes a headrest assembly 10, a sheath assembly 20, and an elastic member 30. The headrest assembly 10 is configured to be connected to a backrest of a seat. The sheath assembly 20 is configured to be connected to a shoulder strap. The elastic member 30 is arranged on the sheath assembly 20. The elastic member 30 is connected to the headrest assembly 10. The elastic member 30 is configured to urge the sheath assembly 20 and the shoulder strap outward, to allow a passenger to enter and exit the seat. The present invention is a simple modification made on the basis of an existing seat in which a sheath assembly 20 is provided on a shoulder strap, where the elastic member 30 is additionally provided on the shoulder strap, the elastic member 30 is connected to the headrest assembly 10, an initial setting direction can be imparted to the elastic member 30 by the headrest assembly 10, and at the moment when the shoulder strap is released from a buckle, the resilience of the elastic member 30 is utilized to automatically urge the sheath assembly 20 and the shoulder strap outward, and to support the sheath assembly 20 and the shoulder strap in an open state. The mechanism has a simple structure, is convenient to assemble and use, and is cost-effective to use. The automatic shoulder strap outward-urging mechanism can make it convenient for a passenger to enter the seat. For example, when a child needs to be placed into the safety seat, the elastic member 30 can push, via the sheath assembly 20, the shoulder strap outward so as to fully expose the backrest and the seat cushion, allowing the child to sit onto the safety seat by himself/herself or allowing a parent to quickly put the child into the safety seat without the need to pulling aside the shoulder strap during the seating process of the child. Moreover, the present invention can solve the problem of five-point harnesses that the shoulder strap is prone to tangling and knotting with the crotch strap, thereby obviating the need to straighten out the harness. After the passenger is seated and the harness is inserted into a corresponding buckle, the shoulder strap is pulled and restrained by the buckle, the sheath assembly 20 follows a movement of the shoulder strap to apply pressure to the elastic member 30, the elastic member 30 is compressed by the sheath assembly 20 to undergo a bending deformation, and the sheath assembly 20 and the shoulder strap can thus fit closely to the body of the passenger. When the passenger intends to leave the seat, the buckle is released, so that the shoulder strap is no longer restrained by the buckle, the elastic member 30 tends to return to its original state, and thus the elastic member 30 urges the sheath assembly 20 and the shoulder strap outward, allowing the passenger to quickly leave the seat.

In some embodiments, two sheath assemblies 20 are provided, the two sheath assemblies 20 are connected to the headrest assembly 10 by different elastic members 30 respectively, and the two sheath assemblies 20 are configured to be urged away from each other under action of the corresponding elastic members 30.

In some embodiments, a flexible mounting sleeve 21 is arranged on the sheath assembly 20, the flexible mounting sleeve 21 extends in a length direction of the sheath assembly 20, and a slot 210 configured for mounting the elastic member 30 is formed inside the flexible mounting sleeve 21. In the present invention, the elastic member 30 is connected to the sheath assembly 20 along the length direction of the sheath assembly 20. In other words, one end of the sheath assembly 20 is indirectly connected to the headrest assembly 10 by the elastic member 30, and an other end of the sheath assembly 20 is configured to be urged outward by a large angle under guidance of the elastic member 30. Moreover, the elastic member 30 is plug-fitted into the flexible mounting sleeve 21 by plug-in connection. Such a connection mode is simple and simplifies the assembly process.

In some embodiments, the sheath assembly 20 includes a sheath body 22, the shoulder strap extends through the sheath body 22, and the sheath body 22 is connected to the flexible mounting sleeve 21. Specifically, the flexible mounting sleeve 21 and the sheath body 22 may be of an integral structure. Alternatively, the flexible mounting sleeve 21 may be an additional part that is first manufactured separately and then mounted to the sheath body 22 by, for example, sewing, button connection, hot-press bonding, or the like.

In an optional embodiment, the flexible mounting sleeve 21 is made of a flexible fabric. In the present invention, the term "flexible" means that the structure is configured to be deformable. For example, the term "flexible mounting sleeve 21" means that this part is configured to be deformable together with the elastic member 30.

In some embodiments, at least a portion of the flexible mounting sleeve 21 is arranged protruding from the sheath body 22 along the length direction of the sheath assembly 20. Specifically, the flexible mounting sleeve 21 includes a first extension segment 211 and a second extension segment 212 arranged in sequence along a length direction of the slot 210, the first extension segment 211 is connected to the sheath body 22, and the second extension segment 212 is configured to be connected to the headrest assembly 10 together with the elastic member 30. In other words, the second extension segment 212 is arranged protruding from the sheath body 22 along the length direction of the sheath assembly 20, and is connected to the headrest assembly 10 together with the elastic member 30.

In some embodiments, an end limiting portion 2121 is provided at an end of the second extension segment 212 away from the first extension segment 211, an opening 2120 in communication with the slot 210 is provided at a side of the end limiting portion 2121 adjacent to the first extension segment 211, the elastic member 30 is configured to enter and exit the slot 210 through the opening 2120, and the end limiting portion 2121 is configured to fix an end of the elastic member 30. Assembly steps of the sheath assembly 20 and the elastic member 30 are as follows. First, the end limiting portion 2121 is bent in a direction away from the opening 2120 to fully expose the opening 2120. Then, the elastic member 30 is inserted into the slot 210 in a direction from the opening 2120 to the first extension segment 211. After the elastic member 30 is inserted in place, the end limiting portion 2121 is folded backward to snap onto the end of the elastic member 30. Thus, the entire elastic member 30 is inserted into the slot 210. Such a connection mode is simple and facilitates easy disassembly and assembly and replacement of the elastic member 30.

In an optional embodiment, a length of a portion of the flexible mounting sleeve 21 connected to the sheath body 22 is at least 1/2 of a total length of the sheath body 22, i.e., a length of the first extension segment 211 is not less than 1/2 of the length of the sheath body 22, so that the elastic member 30 provides stable and reliable support to the sheath body 22.

In some embodiments, the elastic member 30 is a rod-like structure, for example, an elongated rod with a circular cross-section. The elastic member 30 has a simple structure, is cost-effective to manufacture and use, and can be easily plug-fitted into the flexible mounting sleeve 21.

In some embodiments, a first end of the sheath assembly 20 is provided with a connection member configured to be connected to the headrest assembly 10, and a second end of the sheath assembly 20 is configured to be urged outward by the elastic member 30. The arrangement of the connecting member can limit the position of the sheath assembly 20 and prevent the sheath assembly 20 from being dislodged under the action of the elastic member 30.

In some embodiments, the connection member is one or more of a hook-and-loop fastener, a button, a tie, a hook 101, or a snap-fit fastener, so as to be detachably connected to the headrest assembly 10. Correspondingly, the headrest assembly 10 is provided with a connection structure corresponding to the connection member.

In an optional embodiment, the connection member is a hanging buckle 23, and the headrest assembly 10 is provided with a hook 101 configured to engage with the hanging buckle 23. Such a connection mode is simple and facilitates easy disassembly and assembly.

In an optional embodiment, the connection member is arranged at a middle portion of the sheath body 22, and the flexible mounting sleeve 21 is arranged on a left side or a right side of the sheath body 22, so as to be offset from the connection member.

In some embodiments, the headrest assembly 10 is provided with a guide groove 102, the elastic member 30 is configured to be inserted into the guide groove 102, and an extending direction of the guide groove 102 defines an urging direction of the elastic member 30. Such a connection mode is simple, is cost-effective to manufacture, and facilitates easy disassembly and assembly. An assembly process of the automatic shoulder strap outward-urging mechanism is as follows. First, the sheath assembly 20 is assembled, and the elastic member 30 is inserted into the slot 210. Then, the second extension segment 212 of the elastic member 30 is inserted into the guide groove 102. Afterward, the hanging buckle 23 on the first end of the sheath body 22 is connected to the hook 101 on the headrest assembly 10. It is readily understandable that since the connection between the hanging buckle 23 and the hook 101 and the connection between the elastic member 30 and the guide groove 102 are detachable connections, the sheath assembly 20 can be removed as required. For example, the automatic shoulder strap outward-urging mechanism may be applied to a child safety seat when the child is in the infant age, and the sheath assembly 20 may be removed when the child grows up and no longer needs the sheath assembly 20.

In some embodiments, the guide groove 102 extends obliquely upward to guide the elastic member 30 to be urged obliquely upward, so that the shoulder strap can be opened at a large angle, thereby allowing a passenger to enter and exit the seat.

In some embodiments, the headrest assembly 10 includes a housing 11 and an outer cover 12 mounted on an outer side of the housing 11, and the elastic member 30 is connected to the housing 11 or the outer cover 12. Specifically, the guide groove 102 may be provided on the housing 11 or the outer cover 12. It is readily understandable that when the guide groove 102 is provided on the housing 11, the outer cover 12 is necessarily provided with a clearance structure, such as an opening or a notch, for the elastic member 30 to pass through. Similarly, the connection structure corresponding to the connection member on the sheath body 22 may be provided on the housing 11 or the outer cover 12.

The present invention also provides a child safety seat using any of the above-mentioned automatic shoulder strap outward-urging mechanisms, to make it convenient for a child to enter and exit the safety seat. It should also be noted that a harness of a child safety seat generally includes multiple straps, for example, a five-point harness. When the automatic shoulder strap outward-urging mechanism is applied, not only the shoulder straps can be released, but also the shoulder straps can be prevented from entangling and knotting with other straps of the harness. Definitely, the present invention is also applicable to other seats than child safety seats.

The basic principles, main features and advantages of the present invention have been described above. Those skilled in the art should understand that the present invention is not limited to the above embodiments. The descriptions of the embodiments and the specification are only for illustrating the principles of the present invention. Various changes and improvements may be made to the present invention without departing from the spirit and scope of the present invention, and such changes and improvements all fall within the scope of protection claimed by the present invention. The scope of protection claimed by the present invention is defined by the appended claims and their equivalents.

## Claims

1. An automatic shoulder strap outward-urging mechanism, **characterized by** comprising a headrest assembly, a sheath assembly, and an elastic member, wherein the headrest assembly is configured to be connected to a backrest of a seat, the sheath assembly comprises a sheath body and a flexible mounting sleeve, the sheath body is configured to be connected to a shoulder strap, the flexible mounting sleeve extends in a length direction of the sheath assembly and the flexible mounting sleeve is connected to the sheath body, a slot configured for mounting the elastic member is formed inside the flexible mounting sleeve, the elastic member is connected to the headrest assembly, and the elastic member is configured to urge the sheath assembly and the shoulder strap outward, allowing a passenger to enter and exit the seat.

2. The automatic shoulder strap outward-urging mechanism according to claim 1, **characterized in that**, the flexible mounting sleeve comprises a first extension segment and a second extension segment arranged in sequence along a length direction of the slot, the first extension segment is connected to the sheath body, the second extension segment is configured to be connected to the headrest assembly together with the elastic member, an end limiting portion is provided at an end of the second extension segment away from the first extension segment, an opening in communication with the slot is provided at a side of the end limiting portion adjacent to the first extension segment, the elastic member is configured to enter and exit the slot through the opening, and the end limiting portion is configured to fix an end of the elastic member.

3. The automatic shoulder strap outward-urging mechanism according to claim 1 or 2, **characterized in that**, the elastic member is a rod-like structure.

4. The automatic shoulder strap outward-urging mechanism according to claim 1, **characterized in that**, a first end of the sheath assembly is provided with a connection member configured to be connected to the headrest assembly, and a second end of the sheath assembly is configured to be urged outward by the elastic member.

5. The automatic shoulder strap outward-urging mechanism according to claim 4, **characterized in that**, the connection member is one or more of a hook-and-loop fastener, a button, a tie, a hook, or a snap-fit fastener, to be detachably connected to the headrest assembly.

6. The automatic shoulder strap outward-urging mechanism according to claim 1, **characterized in that**, the headrest assembly is provided with a guide groove, the elastic member is configured to be inserted into the guide groove, and an extending direction of the guide groove defines an urging direction of the elastic member.

7. The automatic shoulder strap outward-urging mechanism according to claim 6, **characterized in that**, the guide groove extends obliquely upward to guide the elastic member to be urged obliquely upward.

8. The automatic shoulder strap outward-urging mechanism according to claim 6 or 7, **characterized in that**, the headrest assembly comprises a housing and an outer cover mounted on an outer side of the housing, and the elastic member is connected to the housing or the outer cover.

9. The automatic shoulder strap outward-urging mechanism according to claim 1, **characterized in that**, two sheath assemblies are provided, the two sheath assemblies are connected to the headrest assembly by different elastic members respectively, and the two sheath assemblies are configured to be urged away from each other under action of the different elastic members.

10. A child safety seat, **characterized by** using the automatic shoulder strap outward-urging mechanism according to any one of claims 1 to 9.
